# EUROPÄISCHE PATENTSCHRIFT

(11) **EP 1 837 229 B1**
(45) Veröffentlichungstag und Bekanntmachung des Hinweises auf die Patenterteilung: **31.03.2010**
(21) Anmeldenummer: 06090036.2
(22) Anmeldetag: 22.03.2006
(51) Int. Cl.: B60N 2/225, B60N 2/235

(54) **Gehäuse für ein Gelenkbeschlag eines Autositzes und Verfahren zu seiner Konfektionierung**
Housing for a hinge fitting of an automotive vehicle seat and method for making same
Boîtier pour une ferrure d'articulation d'un siège d'automobile et une methode pour sa production

(43) Veröffentlichungstag der Anmeldung: 26.09.2007
(73) Patentinhaber: Feintool Intellectual Property AG, 3250 Lyss (CH)
(72) Erfinder: Frauchinger, Paul, Cincinnati, OH 45236 (US)
(74) Vertreter: Hannig, Wolf-Dieter

(56) Entgegenhaltungen:
- DE-A1- 2 124 840
- DE-A1- 19 811 096
- DE-A1- 19 853 894
- US-A- 3 678 557
- US-A- 4 680 979
- US-A- 5 611 599

## Beschreibung

Die Erfindung betrifft ein Gehäuse für einen Gelenkbeschlag eines Autositzes, mit einem ersten Gelenkteil, das fest mit dem Gestell der Rückenlehne des Sitzes verbindbar ist, einem zweiten Gelenkteil, das fest mit dem Gestell der Sitzfläche verbindbar ist, wobei die Gelenkteile jeweils mit ihrem senkrecht abgebogenen, stirnseitig aufeinander stoßenden Rand und symmetrisch zur Gelenkachse angeordneten, durch Umformen erzeugte Einsenkungen das Gehäuse bilden, einem zum Gehäuse gehörenden Zahnelement, dessen Zahnung sich über wenigstens einen Kreisbogen erstreckt und radial nach innen ausgerichtet ist und einem die Ränder der Gelenkteile klemmend zusammenhaltenden Ring.

### Stand der Technik

Sitzverstellungskomponenten, beispielsweise feste und schwenkbewegliche Gelenkteile von Gelenkbeschlägen, werden bekanntlich durch Umformen und Feinstanzen oder -schneiden in der für den endgültigen Einsatzzweck sehr hohen Maßhaltigkeit hergestellt.
Diese Gelenkteile besitzen Drehbewegungen übertragende Innen- oder Außenverzahnungen, die als Ausdrückung einstückig mit dem entsprechenden Gelenkteil ausgebildet (DE 32 44 399 C2, DE 28 34 492 C2, DE 32 27 222 C1) sind.

Der bekannte Stand der Technik nach DE 32 44 399 C2 versucht das zur Übertragung der Drehbewegung und der Belastungen von einem Gelenkteil auf das andere Gelenkteil erforderliche Mindestmaß für die wirksamen Verzahnungsbereiche dadurch einzuhalten, dass der beim Feinschneiden eingedrückte Flächenbereich größer ist als der für die Ausdrückung zur Verfügung stehende Flächenbereich, so dass der Überschuss an einzudrückenden Material zur Verbreiterung des jeweils wirksamen Verzahnungsbereichs über die Dicke des Ausgangsmaterials hinaus dient. Dies führt zu einer geringfügigen Verbreiterung der Zahnbreite über die Dicke des Ausgangsmaterials hinaus, jedoch auch zur Schwächung des Materials zwischen ausgedrücktem und eingedrückten Bereich, wodurch Brüche bei plötzlicher Belastung nicht ausgeschlossen werden können.

Außerdem können keine wesentlichen Reduzierungen der wirksamen Dicke der Gelenkteile erzielt werden, weil der eingedrückte Flächenbereich immer auf den Zahnbereich beschränkt bleibt.

Für sehr feine Verzahnungen wie sie für eine stufen- und ansatzlose Verstellung der Rückenlehne unabdingbar sind, stößt das Feinschneiden außerdem an seine technologischen Grenzen.

Die Grenzen des Feinschneidens von Teilepartien mit im Verhältnis zur schneidenden Blechdicke und Materialqualität kleinen Eckenradien sind ausreichend bekannt. Auf Grund von Erfahrungen wird ein Feinschneidschwierigkeitsgrad definiert, der die Schwierigkeitsstufen S1 (leicht), S2 (mittel) und S3 (schwierig) unterscheidet (siehe "Umformen und Feinschneiden" in Handbuch für Verfahren, Werkstoffe, Teilegestaltung, S. 154 bis 165, Verlag Hallwag AG, 1997, Schweiz). Der Schwierigkeitsgrad wird demzufolge im Wesentlichen durch die Schnittliniengeometrie und die Blechdicke bestimmt. Die Schnittliniengeometrie wird dazu in einfache geometrische Grundformen wie Eckenradien, Lochdurchmesser, Schlitz- und Stegbreiten zerlegt. Aus dem Verhältnis einer die Schnittlinien beschreibenden geometrischen Größe zur Blechdicke ergibt sich der Feinschneidschwierigkeitsgrad, der mit steigender Blechdicke zunimmt.

Das bedeutet, dass sich stumpfwinklige Ecken mit großen Radien besser Feinschneiden lassen als spitzwinklige mit kleinen Radien.

Aus der EP 0 694 434 B1 ist außerdem ein Gelenk für einen Autositz bekannt. Dieses Gelenk umfasst einen ersten Flansch und einen zweiten Flansch, wobei der erste Flansch fest mit dem Gestell der Rückenlehne des Sitzes und der zweite Flansch fest mit dem Gestell der Sitzfläche verbunden werden kann. Beide Flansche bilden zusammengesetzt einen Kasten, der durch einen Ring klemmend zusammengehalten wird.

Der erste Flansch ist des weiteren mit einem Zahnring versehen, der eine nach innen gerichtete Verzahnung besitzt und auf einer ringförmigen Lauffläche gegenüber dem Flansch frei drehbar gleiten kann.

Auch dieser bekannte Gelenkbeschlag baut verhältnismäßig materialintensiv, ist damit schwer und damit nicht sonderlich montagefreundlich beim Einbau.

### Aufgabenstellung

Bei diesem Stand der Technik liegt der Erfindung die Aufgabe zugrunde, ein Gehäuse für ein Gelenkbeschlag so auszubilden, dass das Zahnelement eine Höhe aufweist, die deutlich über der Wanddicke für die Gelenkteile liegt, wobei die Gelenkteile und das Zahnelement zusammen eine statisch kompakte Gehäuseeinheit bilden, die ein deutlich reduziertes Gewicht bei gleichzeitig flexibler Einbaufähigkeit, hoher Belastbarkeit und trotzdem großer Genauigkeit besitzt.

Diese Aufgabe wird durch ein Gehäuse für ein Gelenkbeschlag der o.g. EP 0694434 B1 mit den Merkmalen der Ansprüche 1 und 8 gelöst

Vorteilhafte Ausgestaltungen des erfindungsgemäßen Gelenkbeschlags sind den Unteransprüchen entnehmbar.

Die erfindungsgemäße Lösung zeichnet sich dadurch aus, dass ein kompaktes Gehäuse für ein Gelenkbeschlag zur Verfügung gestellt wird, dessen Zahnelement eine Verzahnungsbreite erhält, die mindestens auf das 1,7 fach der Materialdicke des Gelenkteils bemessen ist. Das Zahnelement erhält eine Innenverzahnung mit kleinen Radien, so dass eine große Eingriffsfläche entsteht, mit der es problemlos möglich ist, Schwenkbewegungen ansatz- und stufenlos aber auch große Momente zu übertragen. Von besonderem Vorteil ist es in diesem Zusammenhang, dass Zahnelemente mit verschiedenen Höhen und Breiten einsetzbar sind, so dass Gelenkbeschläge zur Verfügung gestellt werden können, die für spezielle oder bestimmte Belastungswerte geeignet sind.

Zusätzlich lassen sich je nach Anwendungsfall die Verzahnungsbreite aber auch der Durchmesser des Zahnselements entsprechend variieren.
Das Zahnelement stützt sich außenseitig am umgebogenen Rand des ersten Gelenkteils ab und liegt innenseitig am Rand in einer Aufnahme ein, so dass das Zahnelement in X-Achsenrichtung gesichert in der Fußebene festliegt. In Y-Richtung ist das Zahnelement mit dem Rand des ersten Gelenkteils stoffschlüssig entlang des Randes umlaufend verbunden, wobei die stoffschlüssige Verbindung etwa mittig zur Verzahnungshöhe des Zahnelements liegt.

Die stoffschlüssige Verbindung zwischen Zahnelement und erstem Gelenkteil wird vorteilhafterweise durch ein Laserschweißen hergestellt, kann aber auch ein anderes geeignetes Scheißverfahren oder sogar eine Klebverbindung sein.

Dadurch, dass das Zahnelement auch tragende Funktion übernimmt, kann die Wanddicke der Gelenkteile erheblich reduziert werden, wodurch sich die Gelenkteile in einfacheren und kostengünstigeren Werkzeugen feinschneiden und umformen lassen. Die Anwendung mehrstufiger teuerer Fertigungsprozesse wird minimiert.

Gegenüber dem wesentlich komplexeren Feinschneiden mit Kaltfließumformen werden die Gelenkteile in einfachen Feinschneidvorgängen gefertigt und in einem hocheffektiven Verfahren zu einem fertigen Gehäuse für Gelenkbeschläge konfektioniert.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an ein zwei Ausführungsbeispielen näher erläutert werden.
Es zeigt

Fig. 1 eine perspektivische Ansicht eines feingeschnittenen und kaltumgeformten Gelenkteils mit Zahnelement in Einzeldarstellung,

Fig. 2 eine perspektivische Ansicht eines Gelenkteils mit eingesetztem Zahnelement in Schnittdarstellung,

Fig. 3 ein aus einem ersten und einem zweiten Gelenkteil zusammengesetztes Gehäuse für ein Gelenkbeschlag in Schnittdarstellung,

Fig. 4 eine perspektivische Darstellung eines formschlüssig gefügten Gelenkbeschlags und

Fig. 5a) bis 5d) mögliche Varianten von Formschlußverbindungen.

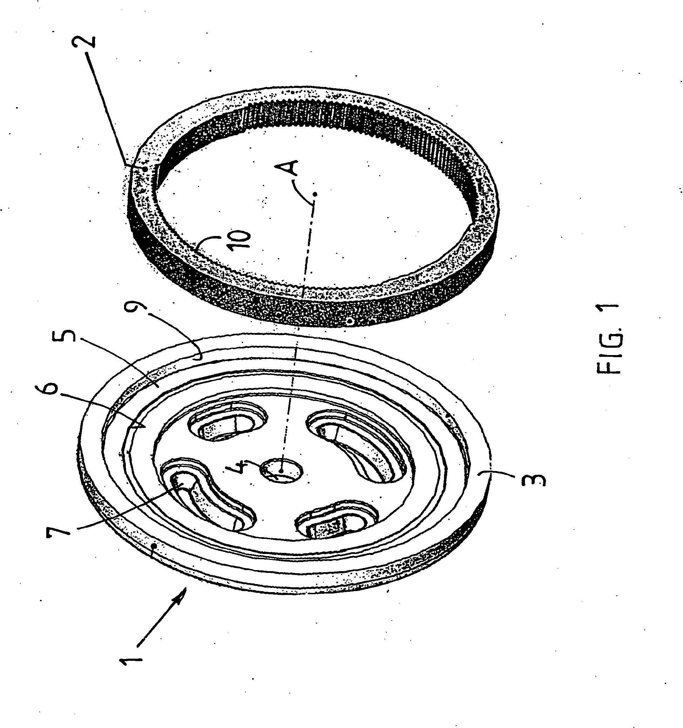

Die Fig. 1 zeigt in auseinander gezogener Darstellung ein erstes Gelenkteil **1** als eine Gehäusehälfte des Gehäuses und ein Zahnelement **2** mit gemeinsamer Gelenkachse **A.** Das kreisrunde, jedoch auf solche geometrische Formen nicht festgelegte erste Gelenkteil **1** wurde aus einem nicht dargestellten Zuschnitt mit einer Dicke **d** von 4 mm durch Feinschneiden und Umformen hergestellt. Es weist im fertig gestellten Zustand einen umlaufenden Rand **3,** eine mittige Lochung **4** für die Aufnahme der Gelenkachse **A,** eine unmittelbar am Rand **3** innen angrenzende, umlaufende flächige Aufnahme **5** für das Zahnelement **2,** eine konzentrisch zur Gelenkachse **A** gelegene Absenkung **6** zur Ausbildung eines umlaufenden inneren Randes und vier ausgedrückte Vertiefungen **7** auf, die zur Befestigung am Gestell der Sitzlehne durch Verschweißen dienen.

Das zweite Gelenkteil **8** hat im wesentlichen eine zum ersten Gelenkteil **1** deckungsgleiche Ausführung und bildet die zweite Gehäusehälfte.

Das Zahnelement **2** hat einen Außendurchmesser, der dem Innendurchmesser des Randes **3** entspricht. Auf der Innenseite **9** des Zahnelements **2** ist eine Feinverzahnung **10** mit beispielsweise einem Radius von 0,3 mm eingeschnitten, die sich über die gesamte Höhe **H** des Zahnelementes **2** und zumindest über einen Kreisbogenabschnitt des Elements **2** erstreckt. Natürlich kann auch der gesamte Zahnelement **2** innen durchgängig mit einer Zahnung versehen sein.

Das Zahnelement **2** hat in diesem bevorzugten Ausführungsbeispiel gegenüber der Dicke **d** des ersten Gelenkteils **1** eine um etwa das 1,7fache größere Höhe und ist somit wesentlich stärker dimensioniert. Je nach der Wahl der Höhe und der Breite des Zahnelements können entsprechend hohe Momente aufgenommen und übertragen werden. Mit dem Einsatz von verschiedenen Zahnelementen **2** unterschiedlicher Höhe und Breite wird es möglich, Gelenkbeschläge mit unterschiedlichen Belastungsgrenzen zu konfektionieren.

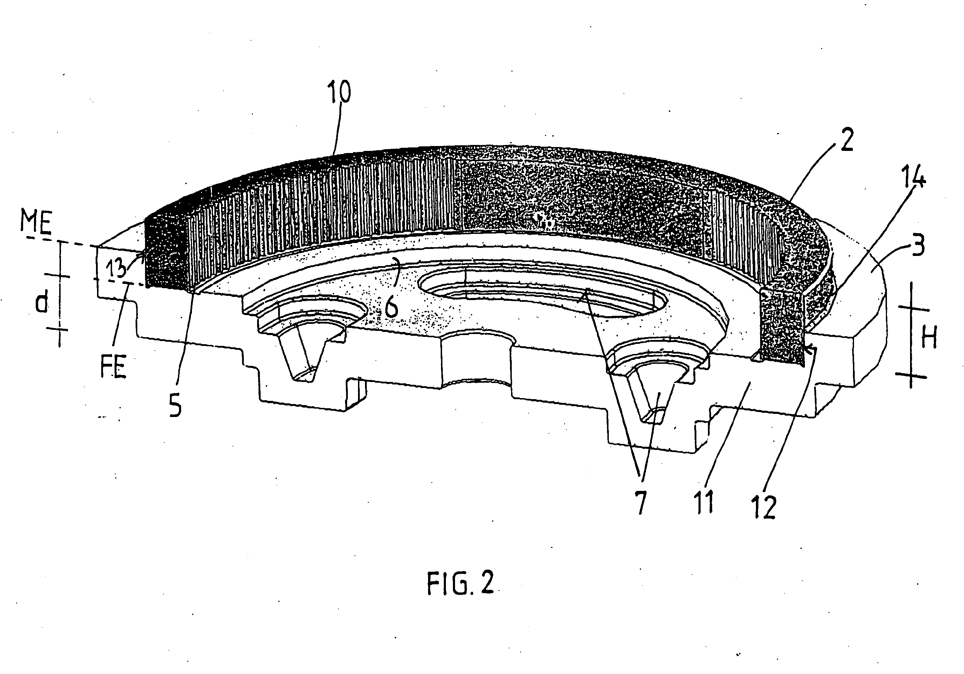

Die Fig. 2 zeigt das in das erste Gelenkteil **1** eingesetzte Zahnelement **2.** Fußseitig liegt das Zahnelement **2** in der unmittelbar an der inneren Wand **11** des Randes **3** angrenzenden horizontal verlaufenden flächigen Aufnahme **5** des ersten Gelenkteils **1** und stützt sich außenseitig an der inneren Wand **11** des Rands **3** ab, so dass das Zahnelement **2** senkrecht zur Gelenkachse **A** festliegt. Der abgebogene umlaufende Rand **3** bildet gewissermaßen ein Widerlager **12** für das Zahnelement **2.** Dadurch, dass das Zahnelement **2** gegenüber der Wanddicke **d** des ersten Gelenkteils **1** wesentlich stärker dimensioniert ist, endet der Rand **3** etwa in der Mittelebene ME des Zahnelements **2.** Der Rand **3** kommt dann ungefähr bei einer Höhe des Zahnelements **2** zu liegen, die ca. 45% seiner Höhe entspricht.

Entlang der Mittelebene **ME** ist die innere Kante **13** des Randes **3** mit dem Zahnelement **2** durch eine Laserschweißung stoffschlüssig verbunden. Natürlich sind auch andere Schweißverbindungen oder auch Klebungen geeignet. Die außen umlaufende Schweißverbindung **14** sichert das Zahnelement **2** gegen Lösen in Y-Richtung bzw. in Richtung der Gelenkachse **A.**

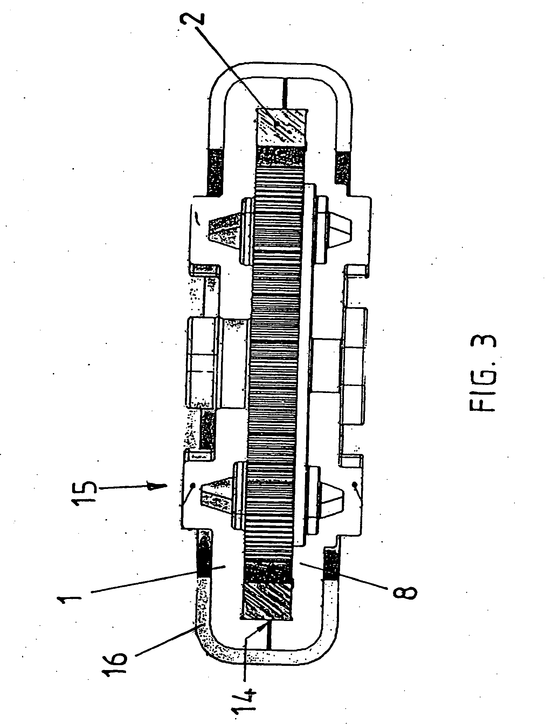

Die Fig. 3 zeigt das aus dem ersten Gelenkteil **1** mit eingeschweißtem Zahnelement **2** und dem zweiten Gelenkteil **8** zusammengesetzte Gehäuse **15.** Das baugleiche zweite Gelenkteil **8** liegt mit seinem äußeren Rand **3** auf dem Rand des ersten Gelenkteils **1** auf. Die Ränder **3** beider Gehäuseteile sind umgriffen von einem Klemmring **16,** der die beiden Teile zueinander klemmend fixiert.

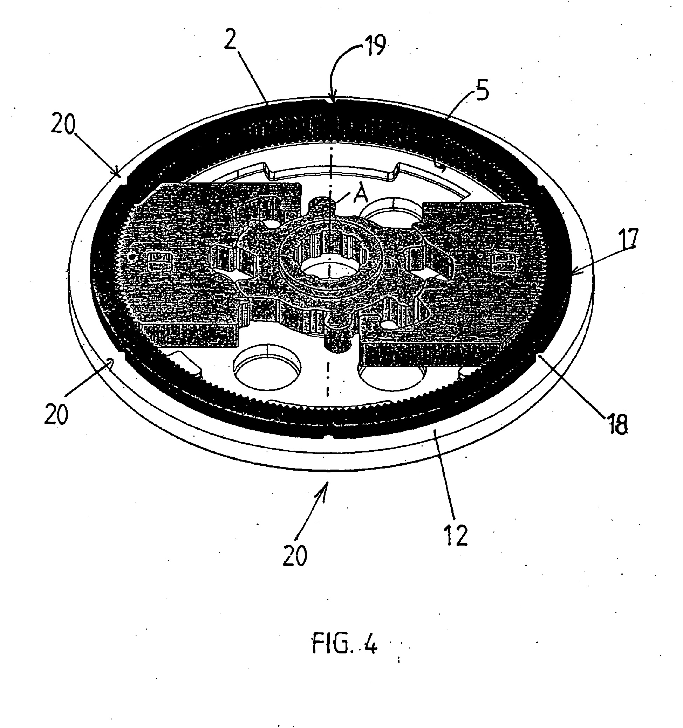

Die Fig. 4 zeigt eine Formschlußverbindung zwischen Zahnelement **2** und dem Widerlager **12** des Gelenkteils **1.** Innenseitig am Widerlager **12** verläuft die Aufnahme **5,** die so bemessen ist, dass sie beim Einfügen des Zahnelements **2** einen Press-Sitz **17** ergibt. Damit das Zahnelement **2** sich gegenüber dem Widerlager **2** nicht verdrehen kann, sind an der senkrechten Wand des Widerlagers **2** koaxial zur Gelenkachse **A** verlaufend in regelmäßigen Abständen Wulste **18** angeformt, die in entsprechende außenseitig am Umfang gelegene Ausnehmungen **19** des Zahnelements **2** beim Fügen satt einliegen.

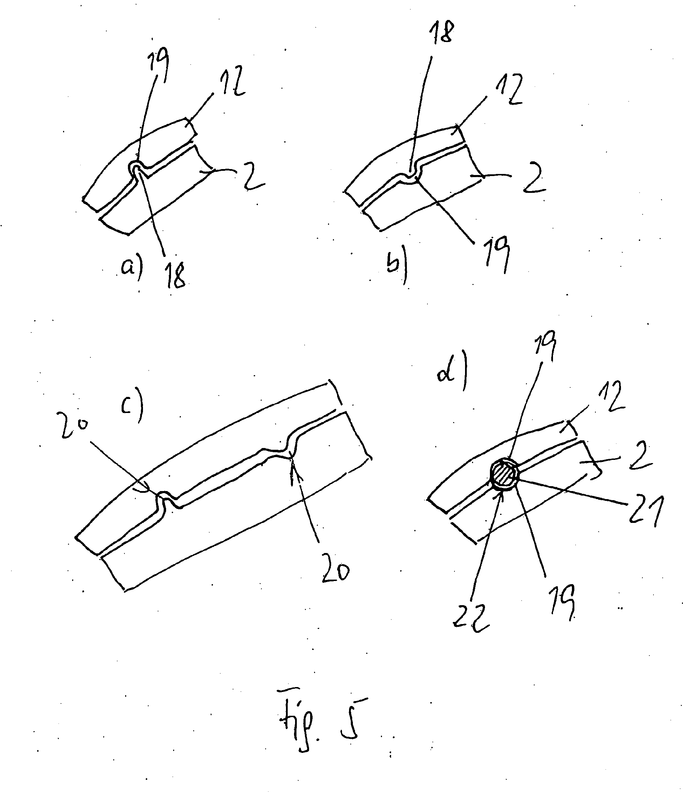

Die Fig. 5a) bis d) zeigen mögliche Varianten der Formschlußverbindung zwischen Widerlager **12** und Zahnelement **2,** wobei in der Fig. 5a) die Anordnung der Wulst **18** am Zahnelement **2** und die dazu entsprechende Ausnehmung **19** im widerlager **12,** in der Fig. 5b) die Variante der Fig. 4, in der Fig. 5c) die alternierende Anordnung von Formschlußverbindungen **20** am Umfang von Widerlager **12** und Zahnelement **2** und in Fig. 5d) die Anordnung zweier zueinander ausgerichteter Ausnehmungen **19,** die einen Aufnahmeraum **22** für die Aufnahme eines Verriegelungsstifts **21** bilden.

Im zusammengebauten Zustand und unter Last stützt sich das Zahnelement **2** jeweils gegen die innere Wand **11** des Randes **3** vom ersten Gelenkteil **1** und vom zweiten Gelenkteil **8** ab. Die Krafteinleitung bei der Übertragung der Belastung erfolgt in das Zahnelement **2,** so dass im Falle einer Schweißverbindung **14** diese nicht auf Scherung beansprucht werden kann.

Bei einem Press-Sitz zwischen Zahnelement **2** und Widerlager **12** erfolgt eine gleichmäßige Verteilung der eingeleiteten Kräfte auf die am Umfang gleichmäßig verteilten Formschlußverbindungen, so dass ein Lösen des Press-Sitzes sicher ausgeschlossen ist.

Mit der erfindungsgemäßen Lösung soll ein Gehäuse **15** mit einer Wanddicke **d** von 4 mm für einen Gelenkbeschlag eines Autositzes konfektioniert werden. Zunachst werden aus einem Stanzstreifen oder einer Platine durch herkömmliches Feinschneiden und Umformen die Basisteile **1** und **8** hergestellt. Separat davon erfolgt die Herstellung des Zahnelements **2** ebenfalls durch Feinschneiden.
Die Teile werden in einfachen Feinschneidwerkzeugen hergestellt, die durchweg bekannt sind und auf deren Beschreibung daher verzichtet werden kann.

Durch Einsetzen des Zahnelements **2** in das entsprechend auf die Abmessung des Zahnelements angepasste Gelenkteil **1** und das Verschweißen desselben mit dem Zahnelement **2** oder dem Einpressen des Zahnelements **2** in die Aufnahme **5** des Gelenkteils **1** entsteht eine zum Zusammenbau geeignete Baugruppe für Gelenkbeschläge. Mit der Wahl einer bestimmten Höhe und Breite des Zahnelements **2** lässt sich ein Gehäuse **15** eines Gelenkbeschlags für einen Autositz für ein bestimmtes Lastmoment konfektionieren.

Bezugszeichenliste
- erstes Gelenkteil: 1
- Zahnelement: 2
- Rand von 1 und 8: 3
- Lochung: 4
- Aufnahme: 5
- Absenkung: 6
- Vertiefung: 7
- zweites Gelenkteil: 8
- Innenseite von 3: 9
- Feinverzahnung: 10
- Wand von 1: 11
- Widerlager: 12
- innere Kante von 3: 13
- Schweißverbindung: 14
- Gehäuse: 15
- Klemmring: 16
- Press-Sitz: 17
- Wulst: 18
- Ausnehmung: 19
- Formschlußverbindung: 20
- Verriegelungsstift: 21
- Aufnahmeraum: 22
- Gelenkachse: A
- Fußebene: FE
- Höhe von 2: H
- Mittelebene: ME

## Patentansprüche

1. Gehäuse für einen Gelenkbeschlag eines Autositzes, mit einem ersten Gelenkteil (1), das fest mit dem Gestell der Rückenlehne des Sitzes verbindbar ist, einem zweiten Gelenkteil **(8),** das fest mit dem Gestell der Sitzfläche verbindbar ist, wobei die Gelenkteile **(1,8)** jeweils mit ihrem senkrecht abgebogenen, stirnseitig aufeinander stoßenden Rand **(3)** und symmetrisch zur Gelenkachse **(A)** angeordneten, durch Umformen erzeugte Einsenkungen das Gehäuse bilden, einem zum Gehäuse gehörenden Zahnelement **(2),** dessen Zahnung **(10)** sich über wenigstens einen Kreisbogen erstreckt und radial nach innen ausgerichtet ist und einem die Ränder der Gelenkteile **(1,8)** klemmend zusammenhaltenden Ring **(16), dadurch gekennzeichnet, dass** der senkrecht abgebogene Rand **(3)** der Gelenkteile **(1,8)** als ein inneres Widerlager **(12)** für das separat durch Feinschneiden gefertigte Zahnelement **(2)** ausgebildet ist, das Zahnelement **(2)** von einer innenseitig des Randes **(3)** gelegenen, am Gelenkteil **(1)** umlaufenden, in die Wand des Gelenkteils eingeformten Aufnahme **(5)** in seiner Fußebene **(FE)** sichernd gehalten und mit dem Rand **(3)** durch eine etwa entlang seiner Mittenebene **(ME)** an einer inneren Kante **(13)** des Randes des Gelenkteils **(1)** außen umlaufende stoffschlüssige Verbindung **(14)** fest verbunden ist, die das Zahnelement **(2)** im wesentlichen in Richtung der Gelenkachse **(A)** sichert.

2. Gehäuse nach Anspruch 1, **dadurch gekennzeichnet, dass** die stoffschlüssige Verbindung zwischen dem Rand **(3)** des Gelenkteils **(1)** und dem Zahnelement **(2)** eine Schweißverbindung, vorzugsweise Laserschweißverbindung ist.

3. Gehäuse nach Anspruch 1, **dadurch gekennzeichnet, dass** die stoffschlüssige Verbindung zwischen dem Rand **(3)** des Gelenkteils **(1)** und dem Zahnelement **(2)** eine Klebverbindung, vorzugsweise Metallklebverbindung ist.

4. Gehäuse nach Anspruch 1 bis 3, **dadurch gekennzeichnet, dass** die Höhe des Widerlagers **(H)** etwa 45% der Höhe des Zahnelements **(2)** entspricht.

5. Gehäuse nach Anspruch 1 bis 4, **dadurch gekennzeichnet, dass** in das Gelenkteil **(1)** Zahnelemente **(2)** mit verschiedenen Höhen, Breiten und Durchmessern einsetzbar angeordnet sind.

6. Gehäuse nach Anspruch 1 bis 5, **dadurch gekennzeichnet, dass** das Zahnelement **(2)** eine geschlossene ring- oder ovalförmige Form hat.

7. Gehäuse nach Anspruch 1 bis 6, **dadurch gekennzeichnet, dass** die Gelenkteile **(1,8)** eine kreis- oder ovalförmige Gestalt aufweisen.

8. Gehäuse für einen Gelenkbeschlag eines Autositzes, mit einem ersten Gelenkteil **(1),** das fest mit dem Gestell der Rückenlehne des Sitzes verbindbar ist, einem zweiten Gelenkteil **(8),** das fest mit dem Gestell der Sitzfläche verbindbar ist, wobei die Gelenkteile **(1,8)** jeweils mit ihrem senkrecht abgebogenen, stirnseitig aufeinander stoßenden Rand **(3)** und symmetrisch zur Gelenkachse **(A)** angeordneten, durch Umformen erzeugte Einsenkungen das Gehäuse bilden, einem zum Gehäuse gehörenden Zahnelement **(2),** dessen Zahnung **(10)** sich über wenigstens einen Kreisbogen erstreckt und radial nach innen ausgerichtet ist und einem die Ränder der Gelenkteile **(1,8)** klemmend zusammenhaltenden Ring **(16), dadurch gekennzeichnet, dass** der senkrecht abgebogene Rand **(3)** der Gelenkteile **(1,8)** als ein inneres Widerlager **(12)** für das separat durch Feinschneiden gefertigte Zahnelement **(2)** ausgebildet ist, das Zahnelement **(2)** von einer innenseitig des Randes **(3)** gelegenen, am Gelenkteil (1) umlaufenden, in die Wand des Gelenkteils eingeformten Aufnahme **(5)** in einem Preßsitz **(17)** gehalten ist, wobei im Widerlager **(12)** und im Zahnelement **(2)** mindestens eine formschlüssige Verbindung **(20)** gegen ein Verdrehen des Zahnelements **(2)** um die Gelenkachse **(A)** in der Aufnahme **(5)** vorgesehen ist.

9. Gehause nach Anspruch 8, **dadurch gekennzeichnet, dass** die formschlüssige Verbindung (20) zwischen Widerlager **(12)** und Zahnelement **(2)** mindestens einen außenseitig am Zahnelement **(2)** koaxial zur Gelenkachse **(A)** angeformten Wulst **(18)** umfasst, dem eine im Widerlager **(12)** entsprechend angeordnete Ausnehmung **(19)** zugeordnet ist, in die die Wulst **(18)** beim Einpressen des Zahnelements **(2)** in die Aufnahme **(5)** satt einliegt.

10. Gehäuse nach Anspruch 8, **dadurch gekennzeichnet, dass** die formschlüssige Verbindung **(20)** zwischen Widerlager **(12)** und Zahnelement **(2)** mindestens eine außenseitig im Zahnelement **(2)** koaxial zur Gelenkachse **(A)** eingeformte Ausnehmung **(19)** umfasst, dem eine innenseitig am Widerlager **(12)** entsprechend angeformte Wulst **(18)** zugeordnet ist, welche beim Einspressen des Zahnelements **(2)** in die Aufnahme **(5)** satt in der Ausnehmung **(19)** einliegend angeordnet ist.

11. Gehäuse nach Anspruch 8, **dadurch gekennzeichnet, dass** die formschlüssige Verbindung **(20)** zwischen Widerlager **(12)** und Zahnelement **(2)** mindestens je eine innenseitig im Widerlager **(12)** und außenseitig im Zahnelement **(2)** eingeformte Ausnehmung **(19)** und einen an die Abmessungen der Ausnehmung angepassten Verriegelungsstift **(21)** umfasst, wobei beim Einpressen des Zahnelements **(2)** in die Aufnahme **(5)** die Ausnehmungen **(19)** zueinander ausgerichtet einen Aufnahmeraum **(22)** zum Einpressen des Verriegelungsstiftes **(21)** ergeben.

12. Gehäuse nach Anspruch 8 bis 11, **dadurch gekennzeichnet, dass** vorzugsweise sechs formschlüssige Verbindungen **(20)** gleichmäßig verteilt am Umfang des Zahnelementes **(2)** und Widerlagers **(12)** angeordnet sind.

13. Gehäuse nach Anspruch 8 bis 12, **dadurch gekennzeichnet, dass** die formschlüssigen Verbindungen **(20)** aus Wulst **(18)** am Zahnelement **(2)** und Ausnehmung **(19)** im Widerlager **(12)** sowie Ausnehmung **(19)** im Zahnelement **(2)** und Wulst **(18)** am Widerlager jeweils alternierend zueinander am Umfang verteilt angeordnet sind.

14. Gehäuse nach Ansprüch 1 oder 8, **dadurch gekennzeichnet, dass** das Zahnelement mit verschiedenen Höhen, Breiten und Durchmessern feingeschnitten ist, dass mit einer an das zu übertragene Moment angepassten Abmessung in das Gelenkteil eingesetzt und mit diesem stoff- oder formschlüssig verbunden ist.

15. Gehäuse nach Anspruch 14 rückbezogen auf Anspruch 1 **dadurch gekennzeichnet, dass** das Gelenkteil und Zahnelement stoffschlüssig, vorzugsweise durch Schweißen oder Kleben, verbunden werden.

16. Gehäuse nach Anspruch 14 rückbezogen auf Anspruch 8, **dadurch gekennzeichnet, dass** das Gelenkteil und Zahnelement formschlüssig, vorzugsweise durch Einpressen, verbunden werden.

## Claims

1. Casing for a hinge attachment of a car seat with a first hinge part **(1)** firmly connectable to the frame of the back of the seat, a second hinge part **(8)** firmly connectable to the frame of the seat, wherein the hinge parts **(1, 8)** with their respective perpendicularly bent off edges **(3)** abutting to each other at their front ends and symmetrically arranged with regard to the hinge axle **(A)** with formed hollows form the casing, a toothed element **(2)** belonging to the casing, the toothing **(10)** of which at least extends over one segment of the circle and is radially directed to the inner side, and a clamping ring **(16)** holding together the edges of the hinge parts **(1, 8), characterized in that** the perpendicularly bent off edges **(3)** of the hinge parts **(1, 8)** are formed as an inner abutment **(12)** for the separately produced by fine blanking toothed element **(2),** the toothed element **(2)** is secured at its bottom **(FE)** by a seating **(5)** lying adjacent to the inner edge **(3),** which is circularly formed into the wall of the hinge part **(1),** and at its outer side is firmly connected to the edge **(3)** through a material connection **(14)** circularly extending approximately alongside its central plane **(ME)** at an inner line **(13)** of the edge of the hinge part **(1),** which substantially secures the toothed element **(2)** in the direction of the hinge axle **(A).**

2. Casing according to claim 1, **characterized in that** the material connection between the edge **(3)** of the hinge part **(1)** and the toothed element **(2)** is a welding connection, preferably a laser welding connection.

3. Casing according to claim 1, **characterized in that** the material connection between the edge **(3)** of the hinge part **(1)** and the toothed element **(2)** is an adhesive connection, preferably a metal adhesive connection.

4. Casing according to claims 1 to 3, **characterized in that** the height of the abutment **(H)** corresponds to approximately 45 % of the height of the toothed element **(2).**

5. Casing according to claims 1 to 4, **characterized in that** into the hinge part **(1)** can be inserted toothed elements **(2)** with various heights, widths and diameters.

6. Casing according to claims 1 to 5, **characterized in that** the toothed element **(2)** has a closed ring or oval shape.

7. Casing according to claims 1 to 6, **characterized in that** the hinge parts **(1, 8)** have a circular or oval shape.

8. Casing for a hinge attachment of a car seat with a first hinge part **(1)** firmly connectable to the frame of the back of the seat, a second hinge part **(8)** firmly connectable to the frame of the seat, wherein the hinge parts **(1, 8)** with their respective perpendicularly bent off edges **(3)** abutting to each other at their front ends and symmetrically arranged with regard to the hinge axle **(A)** with formed hollows form the casing, a toothed element **(2)** belonging to the casing, the toothing **(10)** of which at least extends over one segment of the circle and is radially directed to the inner side, and a clamping ring **(16)** holding together the edges of the hinge parts **(1, 8), characterized in that** the perpendicularly bent off edges **(3)** of the hinge parts **(1, 8)** are formed as an inner abutment **(12)** for the separately produced by fine blanking toothed element **(2),** the toothed element **(2)** is secured in an interference fit **(17)** of a seating **(5)** lying adjacent to the inner edge **(3),** which is circularly formed into the wall of the hinge part **(1),** wherein in the abutment **(12)** and in the toothed element **(2)** is provided at least one form-fit connection **(20)** preventing a twisting of the toothed element **(2)** in the seating **(5)** around the hinge axle **(A).**

9. Casing according to claim 8, **characterized in that** the form-fit connection **(20)** between abutment **(12)** and toothed element **(2)** includes at least one bead **(18)** concentrically to the hinge axle **(A)** formed on the outer side of toothed element **(2),** which is allocated a respective recess **(19)** placed in the abutment **(12),** in which the bead **(18)** form-fit lies when the toothed element **(2)** is pressed into the seating **(5).**

10. Casing according to claim 8, **characterized in that** the form-fit connection **(20)** between abutment **(12)** and toothed element **(2)** includes at least one recess **(19)** concentrically to the hinge axle **(A)** formed into the outer side of the toothed element **(2),** which is allocated a respective bead **(18)** formed on to the inner side of abutment **(12),** which form-fit lies in the recess **(19)** when the toothed element **(2)** is pressed into the seating **(5).**

11. Casing according to claim 8, **characterized in that** the form-fit connection **(20)** between abutment **(12)** and toothed element **(2)** includes at least one recess **(19)** formed into each of the abutment **(12)** at the inner side and the toothed element **(2)** at the outer side and a lock pin **(21)** tailored to the dimensions of the recess, wherein the recesses **(19)** form a room **(22)** for pressing in the lock pin **(21),** when they are aligned to each other during pressing of the toothed element **(2)** into the seating **(5).**

12. Casing according to claims 8, **characterized in that** preferably six form-fit connections **(20)** in regular distances are placed at the perimeter of the toothed element **(2)** and the abutment **(12).**

13. Casing according to claims 8 to 12, **characterized in that** the form-fit connections **(20)** consisting of a bead **(18)** at the toothed element **(2)** and a recess **(19)** in the abutment **(12)** as well as of a recess **(19)** in the toothed element **(2)** and a bead **(18)** on the abutment **(12)** are distributed at the parameter alternating each time.

14. Casing according to claim 1 or 8, **characterized in that** the toothed element is fine blanked with various heights, widths and diameters separate from the hinge parts by fine blanking, which with dimensions matched to the moment to be transmitted is inserted into the hinge part and connected with it by a material or form-fit connection.

15. Casing according to claim 1, **characterized in that** the hinge part and the toothed element are materially connected, preferably by welding or adhesive bonding.

16. Casing according to claim 8, **characterized in that** the hinge part and the toothed element are connected through a form-fit connection, preferably by friction setting.

## Revendications

1. Boîtier pour une ferrure d'articulation d'un siège d'automobile, comprenant une première pièce d'articulation **(1)** qui est raccordable de manière fixe au bâti du dossier du siège, une seconde pièce d'articulation **(8)** qui est raccordable de manière fixe à l'assise, les pièces d'articulation **(1, 8),** avec leur bord **(3)** courbé verticalement, butant l'un sur l'autre du côté frontal, et des enfoncements réalisés par formage et disposés symétriquement par rapport à l'axe d'articulation **(A),** formant respectivement le boîtier, un élément denté **(2)** faisant partie du boîtier, dont la denture **(10)** s'étend sur au moins un arc de cercle et est orientée radialement vers l'intérieur, et une bague **(16)** maintenant ensemble les bords des pièces d'articulation **(1, 8)** en les serrant, **caractérisé en ce que** le bord **(3)** courbé verticalement des pièces d'articulation **(1, 8)** est réalisé en tant que culée intérieure **(12)** pour l'élément denté **(2)** fabriqué de manière séparée par découpage de précision, **en ce que** l'élément denté **(2)** est maintenu en étant bloqué dans son plan de pied **(FE)** par un logement **(5)** situé du côté intérieur du bord **(3),** entourant la pièce d'articulation **(1)** et formé dans la paroi de la pièce d'articulation (1) et est raccordé au bord **(3)** de manière fixe au moyen d'une liaison **(14)** par adhérence de matière, entourant extérieurement à peu près le long de son plan médian **(ME)** une arête intérieure **(13)** du bord de la pièce d'articulation **(1),** cette liaison bloquant l'élément denté **(2)** essentiellement en direction de l'axe d'articulation **(A).**

2. Boîtier selon la revendication 1, **caractérisé en ce que** la liaison par adhérence de matière entre le bord **(3)** de la pièce articulée **(1)** et l'élément denté **(2)** est une liaison par soudure, de préférence une liaison par soudure laser.

3. Boîtier selon la revendication 1, **caractérisé en ce que** la liaison par adhérence de matière entre le bord **(3)** de la pièce articulée **(1)** et l'élément denté **(2)** est une liaison par collage, de préférence une liaison par collage de métal.

4. Boîtier selon les revendications 1 à 3, **caractérisé en ce que** la hauteur de la culée **(H)** correspond à environ 45% de la hauteur de l'élément denté **(2).**

5. Boîtier selon les revendications 1 à 4, **caractérisé en ce que** des éléments dentés **(2)** de différentes hauteurs, différentes largeurs et différents diamètres sont disposés de manière insérable dans la pièce d'articulation **(1).**

6. Boîtier selon les revendications 1 à 5, **caractérisé en ce que** l'élément denté **(2)** a une forme fermée en forme de bague ou d'ovale.

7. Boîtier selon les revendications 1 à 6, **caractérisé en ce que** les pièces d'articulation **(1, 8)** présentent une forme circulaire ou ovale.

8. Boîtier pour une ferrure d'articulation d'un siège d'automobile, comprenant une première pièce d'articulation **(1)** qui est raccordable de manière fixe au bâti du dossier du siège, une seconde pièce d'articulation **(8)** qui est raccordable de manière fixe à l'assise, les pièces d'articulation **(1, 8),** avec leur bord **(3)** courbé verticalement, butant l'un sur l'autre du côté frontal, et des enfoncements réalisés par formage et disposés symétriquement par rapport à l'axe d'articulation **(A),** formant respectivement le boîtier, un élément denté **(2)** faisant partie du boîtier, dont la denture **(10)** s'étend sur au moins un arc de cercle et est orientée radialement vers l'intérieur, et une bague **(16)** maintenant ensemble les bords des pièces d'articulation **(1, 8)** en les serrant, **caractérisé en ce que** le bord **(3)** courbé verticalement des pièces d'articulation **(1, 8)** est réalisé en tant que culée intérieure **(12)** pour l'élément denté **(2)** fabriqué de manière séparée par découpage de précision, **en ce que** l'élément denté **(2)** est maintenu dans un ajustement avec serrage **(17)** par un logement **(5)** situé du côté intérieur du bord **(3),** entourant la pièce d'articulation **(1)** et formé dans la paroi de la pièce d'articulation **(1),** au moins une liaison **(20)** par adhérence de forme, dans la culée **(12)** et dans l'élément denté **(2),** étant ménagée dans le logement **(5)** pour éviter une torsion de l'élément denté **(2)** autour de l'axe d'articulation **(A).**

9. Boîtier selon la revendication 8, **caractérisé en ce que** la liaison **(20)** par adhérence de forme entre la culée **(12)** et l'élément denté **(2)** comprend au moins un bourrelet **(18)** formé du côté extérieur sur l'élément denté **(2)** coaxialement à l'axe d'articulation **(A),** auquel bourrelet correspond un évidement **(19)** disposé de manière correspondante dans la culée **(12),** dans lequel évidement le bourrelet **(18)** repose de manière affleurée lors de l'enfoncement de l'élément denté **(2)** dans le logement **(5).**

10. Boîtier selon la revendication 8, **caractérisé en ce que** la liaison **(20)** par adhérence de forme entre la culée **(12)** et l'élément denté **(2)** comprend au moins un évidement **(19)** formé du côté extérieur sur l'élément denté **(2)** coaxialement à l'axe d'articulation **(A),** auquel évidement correspond un bourrelet **(18)** formé de manière correspondante du côté intérieur sur la culée **(12),** lequel bourrelet, lors de l'enfoncement de l'élément denté **(2)** dans le logement **(5),** est disposé dans l'évidement **(19)** en reposant de manière affleurée.

11. Boîtier selon la revendication 8, **caractérisé en ce que** la liaison **(20)** par adhérence de forme entre la culée **(12)** et l'élément denté **(2)** comprend au moins respectivement un évidement **(19)** formé du côté intérieur sur la culée **(12)** et du côté extérieur sur l'élément denté **(2)** et une tige de verrouillage **(21)** ajustée aux dimensions de l'évidement, les évidements **(19)** orientés l'un vers l'autre, lors de l'enfoncement de l'élément denté **(2)** dans le logement **(5),** donnant un espace de logement **(22)** pour enfoncer la tige de verrouillage **(21).**

12. Boîtier selon les revendications 8 à 11, **caractérisé en ce que** de préférence six liaisons **(20)** par adhérence de forme sont disposées en étant réparties régulièrement sur la circonférence de l'élément denté **(2)** et de la culée **(12).**

13. Boîtier selon les revendications 8 à 12, **caractérisé en ce que** les liaisons **(20)** par adhérence de forme réalisées par le bourrelet **(18)** sur l'élément denté **(2)** et par l'évidement **(19)** sur la culée **(12)** ainsi que par l'évidement (19) dans l'élément denté **(2)** et le bourrelet **(18)** sur la culée sont disposées en étant respectivement réparties sur la circonférence par alternance l'une par rapport à l'autre.

14. Boîtier selon la revendication 1 ou 8, **caractérisé en ce que** l'élément denté **(2)** est découpé par précision en ayant différentes hauteurs, différentes largeurs et différents diamètres, **en ce qu'**il est inséré dans la pièce d'articulation en ayant une dimension ajustée au couple à transmettre et **en ce qu'**il est raccordé à cette pièce d'articulation par adhérence de matière ou de forme.

15. Boîtier selon la revendication 14, faisant référence à la revendication 1, **caractérisé en ce que** la pièce d'articulation et l'élément denté sont raccordés par adhérence de matière, de préférence par soudure ou collage.

16. Boîtier selon la revendication 14, faisant référence à la revendication 8, **caractérisé en ce que** la pièce d'articulation et l'élément denté sont raccordés par adhérence de forme, de préférence par enfoncement.
